# EUROPEAN PATENT APPLICATION

(11) **EP 4 768 179 A1**
(43) Date of publication of application: **01.07.2026**
(21) Application number: 25224652.5
(22) Date of filing: 17.12.2025
(51) Int. Cl.: B24B 41/04, B24B 47/12, B25F 5/00

(54) **ROTOR SHAFT ASSEMBLY**

(30) Priority: 27.12.2024 FI 20246555
(71) Applicant: Mirka Ltd, 66850 Jepua (FI)
(72) Inventor: FINNÄS, Stig, 68690 Sundby (FI); NORDSTRÖM, Caj, 66850 Jeppo (FI); HÄGGBLOM, Mikael, 65100 Vasa (FI); FORSÉN, Fredrik, 68600 Jakobstad (FI)
(74) Representative: Berggren Oy

(57) **Abstract**

There is provided improved balancing of a rotor shaft assembly (124) for a machine tool (100). The rotor shaft assembly (124) comprises an elongated body for forming a rotor axis (112), and a guiding portion for balancing the machine tool (100), arranged at an end of the elongated body. The guiding portion comprises a connector for a tool (110) or tool shaft (104) and an orbit path (117) that is concentric with a longitudinal direction of the elongated body and eccentric with respect to the connector for a tool (110) or tool shaft (104); wherein the guiding portion comprises two or more balancing bodies (126) arranged movable at the orbit path (117) in a plane that is parallel to a radial direction of the rotor shaft assembly (124).

## Description

### TECHNICAL FIELD

The present invention relates to a rotor shaft assembly for a machine tool.

### BACKGROUND

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

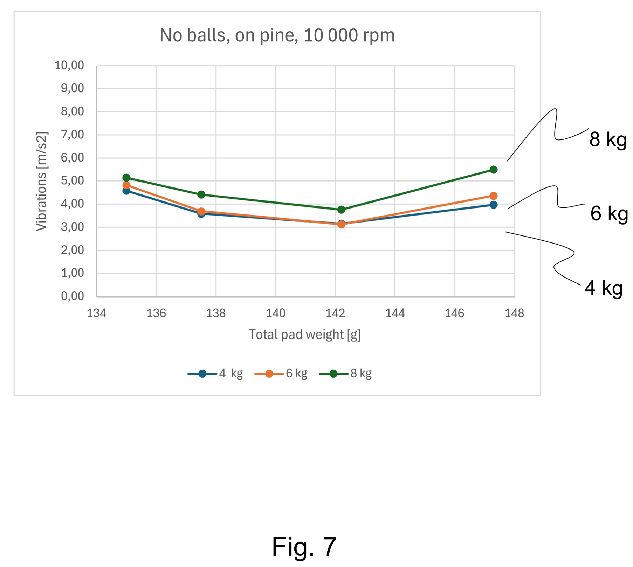

Unbalance of a rotating system of a machine tool can be categorized into a static unbalance and dynamic unbalance. Also friction force can in some cases be considered as an unbalance. Static unbalance of a motor shaft in a machine tool refers to a condition where there's an uneven distribution of mass around the shaft's axis of rotation, but unlike dynamic unbalance, it is characterized by the imbalance being present in a single plane or direction. This means that the center of mass of the shaft (or rotor) does not align with the axis of rotation, causing it to rotate unevenly or exhibit a tendency to rotate to a specific position when not powered. Characteristics and implications of the static unbalance:
Simplified Detection: Static unbalance can be detected by simply placing the shaft on horizontal supports and observing if it rotates to bring the heavier part downwards due to gravity. This method is akin to how a wheel is balanced by adding weights in tire shops.
Vibration: When the shaft rotates, static unbalance causes vibration primarily in the radial direction. However, these vibrations are usually less complex than those caused by dynamic unbalance since they occur in a single plane.
Operational Effects: Static unbalance can lead to operational inefficiencies, such as increased wear on bearings and other components due to the uneven force distribution.
Noise: The vibration caused by static unbalance can also generate noise, contributing to a louder operating environment.
Energy Efficiency: A statically unbalanced shaft can lead to increased energy consumption as the motor works harder to maintain the desired operational speed under the unbalanced condition.
Health: Vibrations at handheld machine tools have effect on health of their users.
When a human body is exposed for higher vibrations in several periods at a longer time, the vibrations might cause injuries to the human body. For example exposure of a person to vibrations from a machine tool can cause the person a phenomenon called "white fingers" also known as Raynaud's phenomenon.
Dynamic unbalance of a motor shaft in a machine tool refers to a condition where there is an uneven distribution of mass around the shaft's rotating axis. Unlike static unbalance, which can be detected and corrected by simply balancing the shaft in one plane, dynamic unbalance involves mass discrepancies that require correction in at least two planes along the shaft. Characteristics and implications of Dynamic Unbalance include:
   Vibrations: The primary symptom of dynamic unbalance is increased vibration, which can be felt at certain speeds and might increase or change in character under different operational conditions.
   Wear and Tear: These vibrations can lead to excessive wear and tear on bearings, seals, and other components, reducing the lifespan of the machine and increasing maintenance requirements.
   Operational Inefficiency: Excessive vibration can also degrade the performance of the machine tool, affecting precision and quality of work.
   Noise: Increased vibrations can also result in elevated noise levels, which can be a concern for workplace safety and comfort.
   Energy Waste: A dynamically unbalanced shaft requires more energy to overcome the irregular forces acting on it, leading to inefficiencies and increased energy consumption.
   Health: Vibrations at handheld machine tools have effect on health of their users. When a human body is exposed for higher vibrations in several periods at a longer time, the vibrations might cause injuries to the human body. For example exposure of a person to vibrations from a machine tool can cause the person a phenomenon called "white fingers" also known as Raynaud's phenomenon Dynamic unbalance occurs when the principal axis of inertia of the rotor (the axis about which the rotor would rotate without any unbalance force) does not coincide with the axis of rotation. This misalignment causes the shaft to exert varying centrifugal forces at different points along its length as it rotates, leading to vibrations that can be both radial and axial.
   Characteristics and implications of grinding force:
      Simplified Detection: Grinding force in a machine tool with eccentrical tool can be detected by working on objects with big friction coefficient. Increased vibrations can be noted by using bigger press force. Fig. 7 illustrates vibrations in [m/s^2] for pressing forces of 4 kg, 6 kg and 8 kg for a machine tool, e.g. in this case a sander, with an eccentrical tool pressed against pine and for total pad weights of the machine tool ranging from about 135 g to at most 160g, about 158g.
      Vibration: When the tool shaft assembly rotates, it also rotates the friction force, which direction is perpendicular to the eccentrical placed tool shaft. Thus, the friction forces cause vibration similar to unbalance.
      Operational Effects: The vibrations of friction force can affect, such as increased wear on bearings and other components due to the uneven force distribution.
      Also, the friction force can together with the tool causing an unstable motor tool, and cause difficulties to handle to machine tool.
      Noise: The vibration caused by friction force can also generate noise, contributing to a louder operating environment.
      Energy Efficiency: The vibrations cause by friction force can lead to increased energy consumption as the motor works harder to maintain the desired operational speed under the unbalanced condition.
      Health: When a human body is exposed for higher vibrations in several periods at a longer time, the vibrations partially induced by friction forces might cause injuries to a human body. For example a phenomenon named "white fingers".

In an orbital sander, or polisher, the tool is eccentrically attached to the motor shaft, making the tool to move in a circle around the longitudinal axis of the motor shaft. Furthermore, the tool shaft might be attached to the motor shaft by a connector to freely rotate in the connector. Such machine is named a random orbital sander or random orbital polisher. One possibility is also that the tool shaft is not able to rotate freely, but instead driven with a different speed than the motor shaft. Such machine is called dual action sander or dual action polisher. The eccentrically moving tool causes a centrifugal force which would produce vibrations in the sander or polisher. By adding a fixed static weight to the motor shaft opposite to the tool, the fixed static weight produces a centripetal force opposite the centrifugal force caused by eccentrically moving tools. Thus, the centrifugal force from the tool is compensated with the centripetal force from fixed static weight. If the fixed static weight is placed at different height of the rotor axis than the tool, the centrifugal and centripetal force produce a turning moment which causes dynamic unbalance. This turning moment can be compensated by adding a fixed dynamic weight at different height of the rotor axis, making an opposite turning moment. The fixed dynamic weight creates a static unbalance that needs to be compensated by a changed fixed static weight in order to make the rotor shaft assembly with tool in dynamic and static balance. In a sander or polisher different resonances can occur due to different technical construction with different stiffness and weights. These possible resonances need an input force to amplify the vibrations at a speed near to the resonance frequency of a sander or polisher. Examples of machine tools comprise sanders, grinders and polishers where abrasives can be used for material removal, finishing, and polishing tasks across various industries. The abrasives are manufactured in different weights (or more precisely, different grit sizes and densities) that can be chosen according to a specific application, including the material being worked on and the desired outcome. When the machine tool is used with different abrasives of different weights, each of the abrasives causes a different imbalance and related implications to the machine tool. In an example of an unbalance in an orbital sander a grinding force is caused to the worked object which causes vibrations to the orbital sander due to different press forces on the worked object and different friction coefficient depending on the worked object and the used abrasive, e.g. grinding paper. With an eccentrically placed tool shaft this grinding force rotates and can increase vibrations, while it can be compared as an unbalance that is perpendicular compared to the eccentricity direction of placement of the tool shaft.

Similar considerations apply to other machine tools, where rotational movement is used for processing objects for material removal, finishing, and polishing.

EP 1 132 180 A2 discloses a portable power tool with an anti-vibration balancing device in an angle grinder with a gear driven tool shaft, where the grinding tool is rotating.

### SUMMARY

The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to some aspects, there is provided the subject matter of the independent claims. Some further aspects are defined in the dependent claims. The embodiments that do not fall under the scope of the claims are to be interpreted as examples useful for understanding the disclosure.

### BRIEF DESCRIPTION OF THE DRAWINGS

For a more complete understanding of example embodiments of the present invention, reference is now made to the following descriptions taken in connection with the accompanying drawings in which:
Fig. 1 illustrates an example of a machine tool comprising a rotor shaft assembly in accordance with at least some embodiments;
Fig. 2 illustrates an example of an orbit path that in accordance with at least some embodiments;
Fig. 3 is a simplified picture of forces that can cause unbalance in a machine tool and which can be compensated by a guiding portion of a rotor shaft assembly in accordance with at least some embodiments;
Fig. 4 illustrates an example of a rotor shaft assembly in accordance with at least some embodiments;
Fig. 5 shows an example of an orbit path in accordance with at least some embodiments;
Fig. 6a and 6b shows examples of balancing bodies positioned to orbit paths in accordance with at least some embodiments;
Fig.7 Illustrates an example how increased press force increase vibrations in a tool without balancing bodies, caused by increased grinding force;

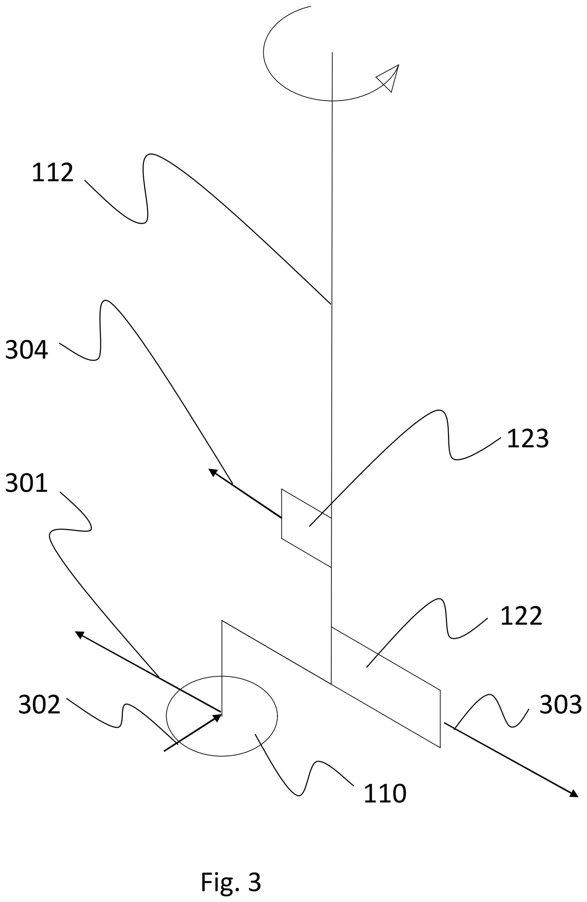

Fig. 3 8 illustrates an example of performance of a random orbital sander comprising a rotor shaft assembly in accordance with at least some embodiments;

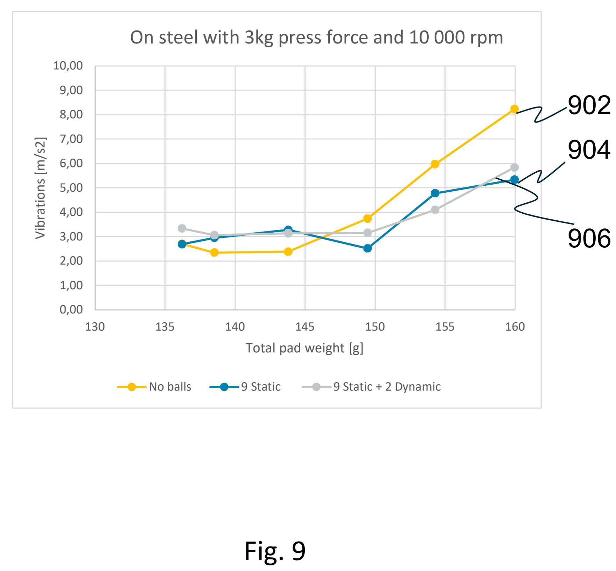

Fig. 9 illustrates an example of performance of a rotor shaft assembly, where the lower orbit path was deviating from the longitudinal axis, and the balancing balls struggled to find a good balancing place; and

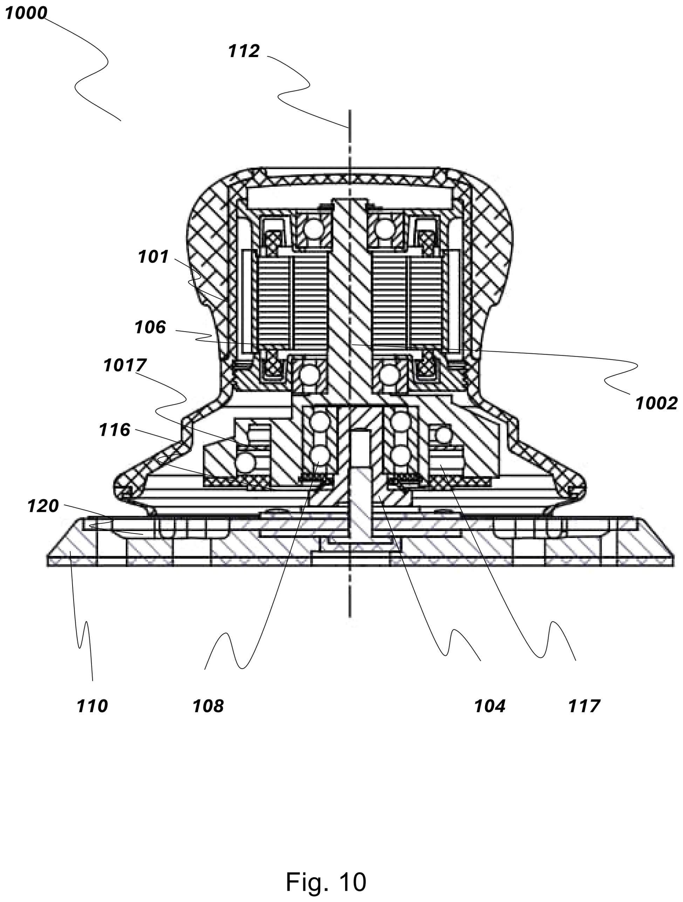

Fig. 10 illustrates an example a machine tool comprising a rotor shaft assembly in accordance with at least some embodiments.

### DETAILED DESCRIPTON OF SOME EXAMPLE EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

Identical or corresponding functional and structural elements which appear in the different drawings are assigned the same reference numerals. When the words first and second are used to refer to different elements, it is to be understood that this does not necessarily imply or mean that the first and second elements are somehow structurally substantially different elements or that their dimensions are substantially different unless specifically stated.

There is provided a rotor shaft assembly for a machine tool comprising an elongated body for forming a rotor axis for a motor and a guiding portion for balancing the machine tool arranged at an end of the elongated body. The guiding portion comprises a connector for a tool or tool shaft and an orbit path that is concentric with a longitudinal direction of the elongated body and eccentric with respect to the connector for a tool or tool shaft. The guiding portion comprises two or more balancing bodies arranged movable at the orbit path in a plane that is parallel to a radial direction of the rotor shaft assembly. The balancing bodies provide improved balancing of the rotor shaft assembly, when the machine tool is used for processing an object using variable tool weights. The guiding portion serves for arrangement for attaching the rotor shaft assembly to a tool or a tool shaft.

In an example, the rotor shaft assembly may be used at motor that is an electric motor or a pneumatic motor. The motor converts energy, e.g. electrical or pneumatic energy, into a rotation of rotor shaft assembly about its axis 112, i.e. the longitudinal direction of the rotor shaft assembly. The rotation of the rotor shaft assembly has a torque that may be used to operate devices. Examples of the electric motor comprise an in-runner motor or an out-runner motor. The electric motor may be Brushless Direct Current (BLDC) electric motor. The electric motor may be installed to a machine tool for operating the machine tool. The machine tool may be a handheld tool for example a polisher, a sander, or a grinder. Examples of sanders comprise an orbital sander and a random orbital sander. Examples of polishers comprise an orbital and a random orbital polisher.

In an example, the rotor shaft assembly may be manufactured by one or more manufacturing processes, e.g. by casting, rotary cutting, 3D-printing and/or injection molding. In an example the rotor shaft assembly may be assembled from an elongated body and one or more further portions that are connected, or assembled, or manufactured, to the elongated body thereby forming the rotor shaft assembly.

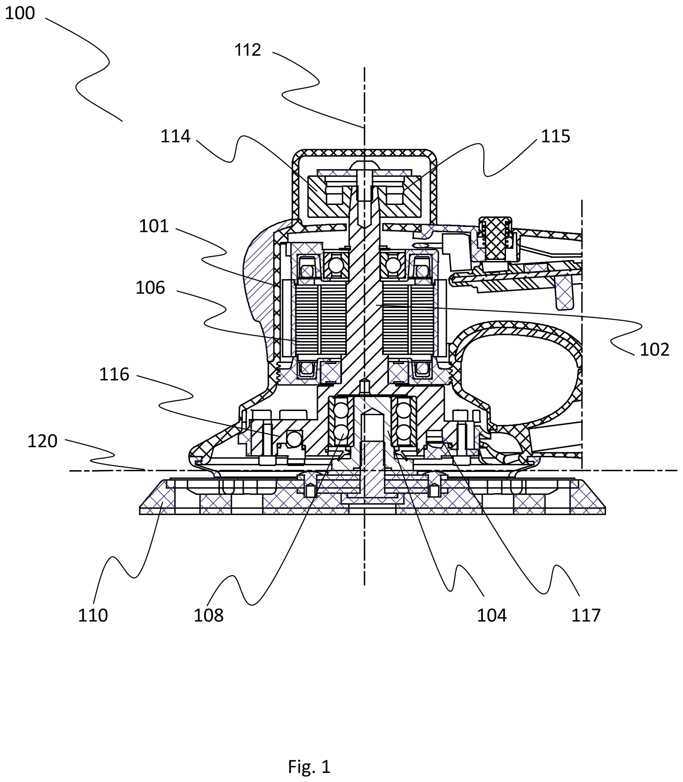

Fig. 1 illustrates an example of a machine tool 100 comprising a rotor shaft assembly in accordance with at least some embodiments. The rotor shaft assembly comprises a motor shaft 102, or a rotor axis, that comprises one or more guiding portions for compensating unbalances working on the rotor shaft assembly. The machine tool is illustrated by a vertical cross-section of the machine tool. The machine tool comprises a housing 101 and inside the housing is provided an electric motor comprising a stator 106 and a rotor, i.e. a motor shaft 102. The motor shaft can be configured to connect to a tool 110 outside of the housing by a tool shaft 104 or the motor shaft can be connected directly to the tool. In this way the electric motor may be used for driving the tool. The motor shaft may be a one-part object. In an example, the motor shaft is of solid material, e.g. steel, that has been machined to include a connector for tool or tool shaft and an orbit path for balancing bodies. In an example, the orbit path may be grinded. The motor shaft 102 is arranged rotatable inside a stator 106 of an electric motor of the machine tool, whereby the motor shaft 102 can be rotated, when the electric motor is driven. The motor shaft forms an elongated body of the rotor shaft assembly. The elongated body has a longitudinal direction, i.e. the axis 112 of rotation of the motor shaft. The longitudinal direction may be parallel with a longitudinal direction of the motor shaft. The tool shaft 104 is at a lower end of the motor shaft outside of the stator and is positioned eccentrically with respect to the longitudinal direction of the motor. Rotation of the motor shaft 102 causes an eccentrical movement of the tool shaft 104 and the tool 110 connected to the tool shaft. The tool shaft 104 may be connected to the motor shaft 102 by a connector that comprises a tool bearing 108 via which the tool 110 can be attached to the tool shaft to rotate freely together with the tool shaft 104 independent of the rotation of the motor shaft 102. An upper balancing unit 114, or a guiding portion, is arranged to an upper end of the motor shaft. The upper balancing unit is outside of the stator at an upper end of the motor shaft above the stator. In an example the upper balancing unit may comprise separate fixed balancing weight (s), that may be fixed with mechanical elements like bolt (s) or nut(s) to the motor shaft or parts connected to the motor shaft, for example a rotor. The fixed balancing weight (s) can also be pressed or threaded to the motor shaft or parts connected to the motor shaft. The rotor, motor shaft, or other parts fixed to the rotating system can also be machined/manufactured in such way that it creates a net centrifugal force, making a part of the rotating system act as a fixed balancing weight. The upper balancing unit may, or may not, also include part (s) or a guiding portion that keeps an orbit path 115 of the upper balancing unit in place. The part that includes the orbit path may be pressed on the motor shaft or fixed with mechanical elements like bolts or nuts or guiding pins or can be part of the motor shaft itself to secure good concentricity between motor shaft rotational axis and the orbit path, which ensure better performance of the balancing system. Overall, parts included in the upper balancing unit can be bolted, threaded, glued, pressed or fixed with other types of mechanical elements or methods to the motor shaft or parts connected to the motor shaft. A lower balancing unit 116, or another guiding portion, is arranged to a lower end of the motor shaft. Thus, the lower balancing unit and the upper balancing unit are at opposite ends of the elongated body. The lower balancing unit 116 extends radially around the tool shaft 104 under the stator and above the tool 110. In an example, the lower balancing unit comprises an orbit path 117 that is concentric with a longitudinal direction of the elongated body. Two or more balancing bodies 126 may be arranged to be movable at the orbit path in a plane that is parallel to a radial direction of the rotor shaft assembly 120. In this way the balancing bodies may be moved on the orbit path for balancing the machine tool, when the rotor shaft assembly is rotated. The balancing bodies may be freely moved at the orbit path, whereby unbalances working on the rotor shaft assembly, such as unbalance of the connector for the tool shaft, unbalance of the tool 110 and friction force against the tool, may be compensated by the balancing bodies changing their positions according to the rotation of the motor shaft. In an example, the upper balancing unit comprises an orbit path 115 that is concentric with a longitudinal direction of the elongated body. Two or more balancing bodies 126 may be arranged to be movable at the orbit path in a plane that is parallel to a radial direction of the rotor shaft assembly 120. Similar to the lower balancing unit, also in the upper balancing unit 114, the balancing bodies may be freely moved at the orbit path. When both the upper balancing unit and the lower balancing unit have orbit paths with balancing bodies, compensation of unbalances working on the rotor shaft assembly, such as unbalance of the connector for the tool shaft, unbalance of the tool 110 and friction force against the tool, may be improved. For example, when the machine tool is turned and the rotor shaft assembly starts to rotate, the balancing bodies of the lower balancing unit and/or the upper balancing unit are displaced from their resting positions and start to move on the orbit path. Movement of the balancing bodies may continue until each of the balancing bodies arrives at a position of equilibrium, where forces acting on the balancing body are balanced out. At the position of equilibrium, the balancing body rotates at the speed of the rotor shaft, or the speed of the rotor shaft assembly. In this way unbalances working on the rotor shaft assembly may be automatically compensated. It should be noted that the automatic compensation provides that also unbalances which can vary between machine tools, such as unbalances originating from manufacturing deviations of fixed balancing weights and orbit dimensions, can be compensated.

In an example in accordance with at least some embodiments, the balancing bodies are spherical balls or cylindrical rollers, or both spherical balls or cylindrical rollers.

In an example in accordance with at least some embodiments, the orbit path 117 is provided at one end of the elongated body formed by the rotor axis that is a one-part object. In an example, the orbit path may be grinded to the rotor axis. The orbit path 117 may be a part of the lower balancing unit 116, where the balancing bodies are arranged to the orbit path.

In an example the lower balancing unit 116 and/or the upper balancing unit 114 comprises at least one fixed static eccentric balancing weight 122 for compensating a static unbalance and/or dynamic unbalance. In an example, the fixed static eccentric weight may be fixed to the lower balancing unit and/or the upper balancing unit, whereby a position of the eccentric weight is fixed to a position around the circumference of the rotor axis.

In an example the lower balancing unit 116 and/or the upper balancing unit 114 comprises at least one fixed dynamic eccentric balancing weight 123 for compensating a dynamic unbalance. In an example, the fixed dynamic eccentric balancing weight may be fixed to the lower balancing unit and/or the upper balancing unit, whereby a position of the eccentric weight can move around the circumference of the rotor axis. The dynamic eccentric balancing weight may be provided by the balancing bodies 126 arranged to an orbit path 115, 117.

In an example in accordance with at least some embodiments, there is provided a rotor shaft assembly for a machine tool 100 comprising an elongated body for forming a rotor axis and a guiding portion for balancing the machine tool, arranged at an end of the elongated body. The rotor shaft assembly comprises a connector for a tool or tool shaft 104 and one or more orbit paths 115,117 that are concentric with a longitudinal direction of the elongated body and eccentric with respect to the connector for a tool or tool shaft. The guiding portion comprises two or more balancing bodies 126 arranged movable at the orbit path in a plane that is parallel to a radial direction of the rotor shaft assembly 120.

In an example in accordance with at least some embodiments, the orbit path 115 and/or the orbit path 117 comprises 2, 3, 4, 5, 6, 7, 8, 9 or more balancing bodies 126. Examples of the balancing bodies comprise spherical balls and cylindrical rollers. The balancing bodies may be held at the orbit path by a retainer. Examples of suitable materials for the balancing bodies comprise high carbon chrome steel (AISI 52100), stainless steel (AISI 440C, AISI 304, AISI 316), lead (Pb) and ceramic (Silicon Nitride, Si3N4). It should be noted that the balancing bodies comprise precision engineered components that have been adapted to have a low friction of movement on the orbit path.

One possibility in accordance with at least some embodiments, the orbit path 115, and/or 117 comprises balancing bodies 126 of two or more weights. The weights of the balancing bodies may be determined to match a designed total weight of the balancing bodies which provides a sufficient balancing force at a given speed and friction force acting on the tool. It should be noted that additionally or alternatively the weights of the balancing bodies may be determined for providing a balancing force at one or more ranges of rotational speeds of the rotor shaft assembly, or motor. A range of rotational speeds of the motor comprises a lower speed of the motor and a higher speed of the motor. The lower speed of the motor may comprise one of: 500 rpm; or 1000 rpm; 1500 rpm; 2000 rpm; 2500 rpm; 3000 rpm; 3500 rpm; 4000 rpm; 4500 rpm; 5000 rpm; 5500 rpm; 6000 rpm; 6500 rpm; 7500 rpm; 8000 rpm; 8500 rpm; 9000 rpm; 9500 rpm; 10000 rpm. The higher speed of the motor may comprise a speed that is higher than the lower speed of the motor of: 1000 rpm; 1500 rpm; 2000 rpm; 2500 rpm; 3000 rpm; 3500 rpm; 4000 rpm; 4500 rpm; 5000 rpm; 5500 rpm; 6000 rpm; 6500 rpm; 7500 rpm; 8000 rpm; 8500 rpm; 9000 rpm; 9500 rpm; 10000 rpm. Therefore, weights of the balancing bodies may be determined according to the speed range(s) and friction force(s) acting on the tool, where the balancing bodies are to provide a balancing force.

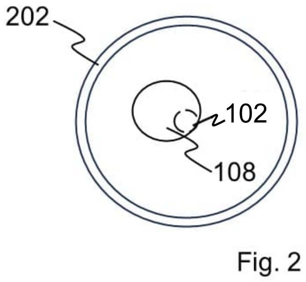

Fig. 2 illustrates an example of an orbit path that in accordance with at least some embodiments. The orbit path 202 may be an orbit path of an upper balancing unit 114 and/or a lower balancing unit 116 described with Fig. 1. The orbit path is illustrated when viewed from a direction that is parallel with the longitudinal direction of the motor shaft forming the axis 112. The orbit path is concentric with the longitudinal direction of the elongated body and eccentric with respect to the connector for a tool or tool shaft. The connector for a tool shaft is illustrated by the tool bearing 108 for the tool shaft.

Fig. 3 is a simplified picture of forces that can cause unbalance in a machine tool and which can be compensated by one or more guiding portions of a rotor shaft assembly in accordance with at least some embodiments. In an example, the machine tool may be in accordance to described with Fig. 1. The machine tool may be for example a polisher, a sander, or a grinder. The forces are illustrated along a length of the axis 112 of the rotor shaft assembly. Rotation of the tool 110 causes a centrifugal force 301. This centrifugal force 301 may be compensated by the centrifugal force 303 caused by the fixed static eccentric balancing weight 122. The fixed static eccentric balancing weight may compensate a static unbalance. If the centrifugal force 301 and centrifugal force 303 are working at different positions, e.g. different heights, along the axis of the axis 112 they will cause a turning moment, or a dynamic unbalance. This dynamic unbalance may be compensated by an fixed dynamic eccentric balancing weight 123 that causes a centrifugal force 304 for compensating the dynamic unbalance. The fixed dynamic eccentric balancing weight and the fixed static eccentric balancing weight may compensate the static and dynamic unbalance by causing a turning moment which may cancel the static and dynamic unbalance caused by the centrifugal forces working at different positions along the axis 112. In this way a static and dynamic balance may be achieved. It should be noted that in addition to the centrifugal force 301 of the rotation of the tool, one or more further centrifugal forces 302, for example a grinding force, may be caused when the tool is applied to an object for working the object and the tool is pressed against the object. These further centrifugal forces are dependent on characteristics of the tool, characteristics of the worked material and a force at which the tool is pressed against the worked object. In order to compensate the imbalance caused by the one or more further centrifugal forces in addition to the static imbalance and dynamic imbalance caused by the rotation of the tool, the fixed static eccentric balancing weight 122 and the fixed dynamic eccentric balancing weight 123 may be turned around the axis 112 and weights of the static weight and the dynamic weight may be adjusted.

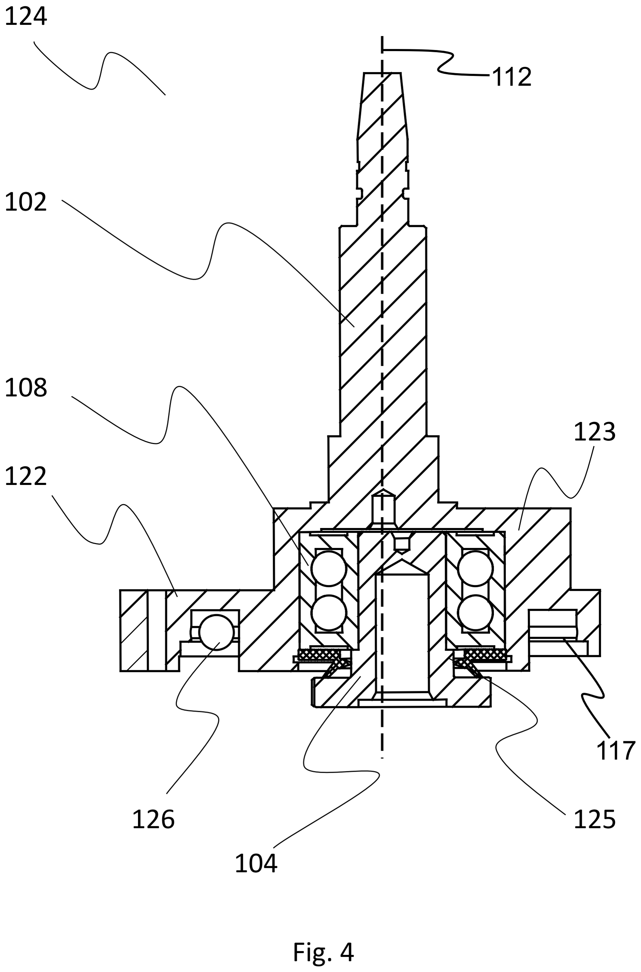

Fig. 4 shows an example of a rotor shaft assembly for a machine tool in accordance with at least some embodiments. The rotor shaft assembly 124 may be the rotor shaft assembly of the machine tool described with Fig. 1 and comprise an fixed static eccentric balancing weight 122 for compensating static imbalance and an fixed dynamic eccentric balancing weight 123 for compensating dynamic imbalance, room for a connector of a tool or tool shaft and an orbit path 117. In an example, the orbit path may comprise two or more balancing bodies 126. The orbit path may comprise at least one section that is curved about the axis 112 for compensating the dynamic imbalance by movement of the balancing bodies. The motor shaft may be a one-part object. In an example, the motor shaft is of solid material, e.g. steel, that has been machined to include a connector for tool or tool shaft and an orbit path. The one-part structure facilities avoiding deviations which could be caused by assembling the rotor shaft assembly from individual pieces. In this way accuracy of compensating imbalances by the balancing bodies at the orbit path may be supported.

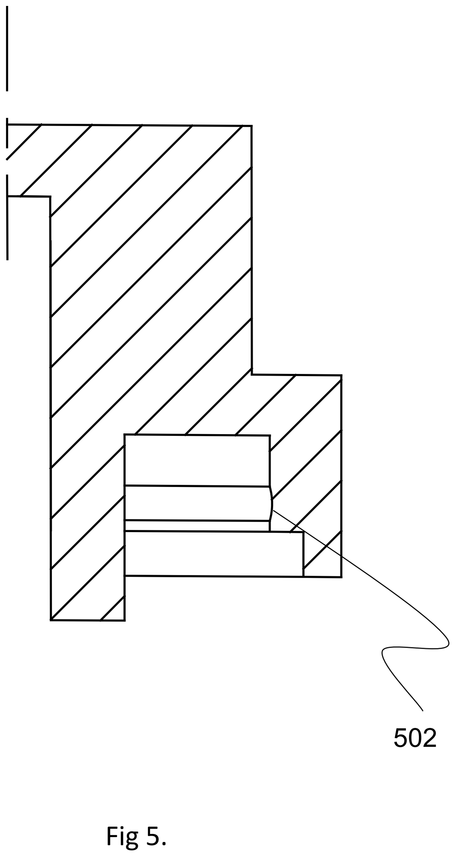

Fig. 5 shows an enlarged portion of an orbit path in accordance with at least some embodiments. The enlarged portion of an orbit path may be from the orbit path 117 of the rotor assembly of Fig. 4. The orbit path may comprise at least one section that is curved about the axis 112 for compensating the static and/or dynamic imbalance by movement of the balancing bodies. It should be noted that an orbit path of the upper balancing unit 114 of the machine tool described with Fig. 1. may have a similar construction. In an example, the orbit path has at least one curvature surface 502 concentric with the longitudinal direction of the rotor shaft assembly. In an example, the curvature surface may be a grinded surface. The at least curvature surface may be configured for facilitating movement of balancing bodies such as spherical balls and/or cylindrical rollers along the orbit path. In an example, the at least one curvature surface may be shaped and dimensioned to serve for a raceway for the spherical balls and/or cylindrical rollers. For example, the orbit path may comprise at least one curvature surface configured to serve for a raceway for the spherical balls, or at least one curvature surface configured to serve for a raceway for the cylindrical rollers, or at least one curvature surface configured to serve for a raceway for the spherical balls and the cylindrical rollers. It should be noted that the orbit path is designed in such way that a friction between the balancing bodies and trace is as low as possible, which makes it easier for the balancing bodies to freely move, improving the performance of the balancing system. The trace can be machined for example by grinding so that concentricity between orbit path and motor shaft is lower than 0.10mm and surface roughness is kept low. The orbit path surface may or may not have a coating, for example diamond layer coating, tungsten coating or polymer coating, for lowering the friction and heat buildup, reducing wear, and/or making the surface harder to reduce contact area against the balancing bodies. The space where the balancing bodies move towards the raceway, or orbit path, may or may not partially include a fluid, which lowers the friction between the balancing bodies and the orbit path, and also acting as a damping fluid, which improves the performance of the balancing system. The volume of this fluid is less than 50% of the volume of the orbit path/ balancing body chamber.

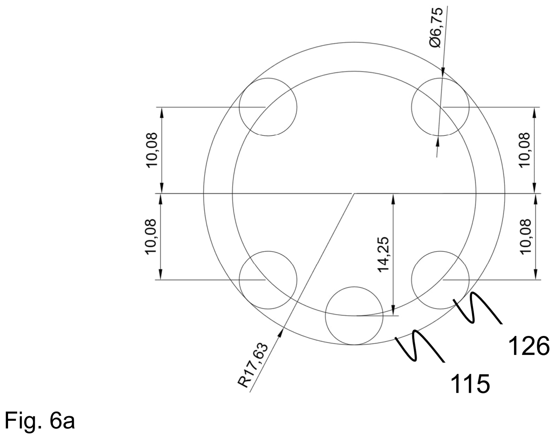

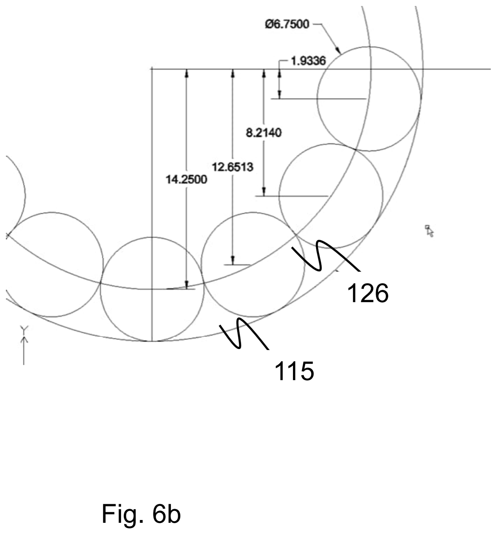

Fig. 6a and 6b show examples of balancing bodies positioned to orbit paths in accordance with at least some embodiments. The positions are described with reference to the machine tool described with Fig. 1. The balancing bodies 126 are shown on the orbit paths 115 at positions of equilibrium. The balancing bodies are moved to the positions, when a machine tool is turned and a rotor shaft assembly of the machine tools is rotated at a rotational speed, whereby the balancing bodies are displaced from their resting positions, start to move, and eventually arrive at the positions of equilibrium. The examples of Fig. 6a and 6b illustrate how the balancing bodies may automatically compensate varying unbalances working on a rotor shaft. The varying unbalances may be caused by changes to a centrifugal force of a tool and connector and/or a change of a grinding force. In an example, a change to a centrifugal force of a tool and connector may be caused by a tool pad weight if the tool pad is changed. In an example, a change of a grinding force may be caused by a change of force at which the tool is pressed against the object.

Fig. 6a illustrates an example of the positions of the balancing bodies 126, when an imbalance to be compensated by the balancing bodies is small. In such a case unbalances may be compensated by the balancing bodies that are spaced apart from each other and the balancing bodies are grouped into at least two groups that are arranged on opposite sides of the orbit path 115. The groups may be determined based on a diameter of the orbit path that is arranged equidistant from each group of balancing bodies. In the illustration of Fig. 6a the balancing bodies have the largest distance between each other are grouped to a different group and balancing bodies that have the smallest distance are grouped to another group. The diameter of the orbit path is arranged equidistant from each group.

Fig. 6b illustrates an example of the positions of the balancing bodies 126, when an imbalance to be compensated by the balancing bodies is larger than in the case of Fig. 6a. In such a case unbalances may be compensated by the balancing bodies that are arranged side-by-side on the orbit path 115 and adjacent to each other, thereby forming thereby a single group of balancing bodies.

It should be noted that although the balancing bodies are described in Fig. 6a and Fig. 6b with reference to the orbit path of the upper balancing unit the balancing bodies may have similar positions at the orbit path 117 of the lower balancing unit.

Table 1 shows examples of maximum balancing forces provided by the balancing bodies 126 for compensating imbalance. The maximum balancing force may be provided, when the balancing bodies are arranged side-by-side on the orbit path 115 and adjacent to each other according to the example illustrated in Fig. 6b. The balancing forces have been calculated for different numbers of balancing bodies, e.g. balls, on the orbit path. The balancing forces have been calculated for tree, five and seven balancing bodies. In this example, the orbit path is a circle that has a diameter of 35.25 mm and thus the radius is 17.6250 mm. Fig. 6b shows positions of the balancing bodies on the orbit path by distances of centers of the balancing bodies from the diameter of the orbit path. It should be noted that, effect of further balancing bodies than seven balancing bodies on the orbit path is reduced since the eighth balancing body and any subsequent balancing body arranged side-by-side on the orbit path span 180 degrees of the circle formed by the orbit path, thereby representing half of the orbit path's total circumference. Therefore, a preferred number of balancing bodies on the orbit path may be determined such that the balancing bodies cover less than a half of the orbit path, or less than 180 degrees of the circle formed by the orbit path, when the balancing bodies are arranged side-by-side on the orbit path. It should be noted that, when the machine tool is used and the rotor shaft assembly is rotating, the balancing bodies may position themselves against each other at the orbit path, thus according to the illustration in Fig. 6b, which gives the maximum balancing force. Thus, a total compensating force of the balancing bodies positioned in accordance with Fig. 6a is less than a total compensating force of the balancing bodies positioned in accordance with Fig. 6b, that is the maximum balancing force.

**Table 1**

| Ball diameter | Ball amount | Balancing force at 10 000 rpm |
|---|---|---|
| 4.75 mm | 3 pcs | 19.4 N |
| 4.75 mm | 5 pcs | 30.3 N |
| 4.75 mm | 7 pcs | 50.0 N |
| | | |
| 6 mm | 3 pcs | 41.1 N |
| 6 mm | 5 pcs | 60.6 N |
| 6 mm | 7 pcs | 71.0 N |
| | | |
| 6.75 mm | 3 pcs | 54.2 N |
| 6.75 mm | 5 pcs | 76.7 N |
| 6.75 mm | 7 pcs | 80.9 N |

Fig. 7 shows an example of vibrations measured from a random orbital sander without balancing bodies. The random orbital sander was used for grinding pine with different grinding discs on the tool, or tool pad, whereby total pad weights varied from 135 g to 158 g. The vibrations [m/s²] were measured at press forces of 4 kg, 6 kg and 8 kg applied to the random orbital sander. When the press force of the tool pad increases against the work surface, so does the grinding force. Fig.7 shows that for the same tool pad weight the vibrations increase, when press force is increased. Fig.7 also shows that the sander has lowest vibration level with a given tool pad weight, in this example around 142gr. And if the tool pad significantly goes above or below the optimal weight, the vibrations will increase. The whole idea with the automatic ball balancer is to make this curve flatter for a given press force and different tool pad weights, so that a wider range of tool pad weights can be used without excessive vibrations. Fig. 7 further shows the measured vibrations increased for pad weights which deviated, thus were less or higher than, from a fixed static balancing weight of the random orbital sander. This phenomenon can be seen at increased vibrations for total pad weights less than 140 g and higher than 150 g. With larger press force of 6 kg the level of measured vibrations also increased.

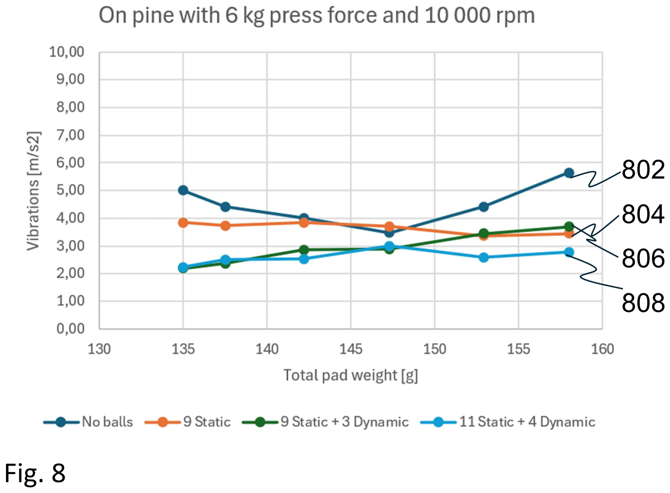

Fig. 8 illustrates an example of performance of a random orbital sander comprising rotor shaft assemblies in accordance with at least some embodiments. The performance is illustrated by measurements from sanders with different setups of balancing bodies and by measurements from the sander without balancing bodies. The sanders with balancing bodies comprised in one setup only a lower balancing unit 116 and in some setups also additionally an upper balancing unit 114 in accordance to described with Fig. 1. Spherical balls were used as balancing bodies 126. The sanders with balancing bodies had motor shafts that were one-part objects. The orbit path 117 of the lower balancing unit, or simply the lower orbit path, deviated 0.03 mm from the axis 112. The orbit path 115 of the upper balancing unit, or simply the upper orbit path, deviated 0.02 mm from the axis 112. Vibrations [m/s²] were measured, when the sanders were used to process pine with different pad weights and 6 kg press force applied to the sander. The vibrations were measured using the following setups: sander without balancing bodies 802; sander having nine balancing bodies positioned to the lower orbit path 804 (thus this sander had no upper orbit path or balancing bodies on the upper orbit path); sander having nine balancing bodies positioned to the lower orbit path and further three balancing bodies positioned to the upper orbit path 806; sander having eleven balancing bodies positioned to the lower orbit path and further four balancing bodies positioned to the upper orbit path 808. The measured vibrations show in general the lowest vibrations for the sander having eleven balancing bodies positioned to the lower orbit path and further four balancing bodies positioned to the upper orbit path. The measured vibrations show that the sander having nine balancing bodies positioned to the lower orbit path and further three balancing bodies positioned to the upper orbit path had lower vibrations than the sander that only had balancing bodies at the lower orbit path. The measured vibrations show that the sander that only had balancing bodies at the lower orbit path had lower vibrations with four pad weights out of six pad weights than the sander without balancing bodies. Therefore, performance of the sander in terms of vibrations can be improved when the balancing bodies are used than if no balancing bodies are used.

Fig. 9 illustrates an example of performance of a random orbital sander comprising a rotor shaft assembly in accordance with at least some embodiments. The performance is illustrated by measurements from a sander with different setups of balancing bodies and without balancing bodies. The sander with balancing bodies comprised in one setup only a lower balancing unit 116 and in other setups additionally an upper balancing unit 114 in accordance to described with Fig. 1. Spherical balls were used as balancing bodies 126. The sander had a motor shaft with an integrated lower orbit path. The orbit path 117 of the lower balancing unit, or lower orbit path, deviated 0.06 mm from the axis 112. The orbit path 115 of the upper balancing unit, or simply the upper orbit path, deviated 0.03 mm from the axis 112. Vibrations [m/s²] were measured, when the sanders were used to process steel with different pad weights and 3 kg press force applied to the sander. The vibrations were measured using the following setups: sander without balancing bodies 902; sander having nine balancing bodies positioned to the lower orbit path (thus this sander had no upper orbit path or balancing bodies on the upper orbit path) 904; sander having nine balancing bodies positioned to the lower orbit path and further two balancing bodies positioned to the upper orbit path 906. The measured vibrations show that the sanders that had balancing bodies had lower vibrations than the sander that had no balancing bodies at all particularly for the higher pad weights above 148 g. For the optimal pad weight of 143g the balancing bodies 126 increased vibration compared to without balancing bodies. The setups of the sander with balancing bodies for the measurements illustrated in Fig. 9 had a larger deviation of lower orbit path from the axis 112, which is likely to cause that the sanders with balancing bodies outperform the sander without balancing bodies mostly at the higher pad weights.

The examples in Fig. 8 and Fig. 9 show the importance of concentric orbit paths, and why a small deviation from the axis 112 is crucial to get a good balancing effects by balancing bodies arranged on the orbit path. To achieve a small deviation the orbit path is machined directly into the guiding portion of the motor shaft, thereby avoiding double deviations caused by machining a separate balancing unit and machining an attachment for the balancing unit onto the motor shaft.

Fig. 10 illustrates an example a machine tool comprising a rotor shaft assembly in accordance with at least some embodiments. The rotor shaft assembly of the machine tool 1000 comprises a motor shaft 1002 that may be in accordance to the machine tool describe with Fig. 1 with a difference that below the stator 106 there are more than one orbit path for balancing bodies 126. Accordingly, instead of having only one orbit path below the stator as described in Fig. 1, the rotor shaft assembly may comprise two orbit paths for compensating unbalances. The orbit paths may be arranged on at different axial positions such that one of the orbit paths is closer to the tool 110 than the other and another one of the orbit paths is closer to the stator. In this way, rotor shaft assembly many comprise a first lower orbit path 117, similar to described in Fig. 1, and a further lower orbit path 1017 between the first lower orbit path and the stator. It should be noted that the further lower orbit path 1017 may also be referred to an upper orbit path because it is above the orbit path 117. Moreover, at least in some embodiments the upper balancing unit 114 may be optional, since the lower balancing unit 116 may comprise two orbit paths, thus the first lower orbit path 117 and the further lower orbit path 1017 between the first lower orbit path 117 and the stator 106.

In an example in accordance with at least some embodiments, the machine tool 1000 comprises more than one orbit path, e.g. at least two orbit paths 117, 1017, arranged successively along the longitudinal direction of the elongated body between a tool end of the rotor shaft and a stator of the motor. It should be noted that the tool end refers herein to an end of the rotor shaft that is adapted to be connected to a tool 110 or a tool shaft 104.

In an example in accordance with at least some embodiments, the rotor axis, or motor shaft 102, is a one-part object comprising at least two orbit paths 117, 1017. In an example the orbit paths may be machined directly into the guiding portion of the motor shaft.

The foregoing description has provided by way of exemplary and nonlimiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention.

### LIST OF REFERENCE SIGNS

100 machine tool
101 housing
102 motor shaft
104 tool shaft
106 stator
108 tool bearing
110 tool
112 axis
114 upper balancing unit
115 orbit path of upper balancing unit
116 lower balancing unit
117 orbit path of lower balancing unit
120 radial direction of the rotor shaft assembly
122 fixed static eccentric balancing weight
123 fixed dynamic eccentric balancing weight
124 rotor shaft assembly
125 sealing
126 balancing body
202 orbit path
301 centrifugal force of tool and connector
302 grinding force
303 centrifugal force of fixed static weight
304 centrifugal force of fixed dynamic weight
502 curvature surface.
4kg, 6 kg, 8kg measurements at different press forces in Fig. 7
802, 802, 804, 806, 808 measurements according to different setups of a random orbital sander in Fig. 8
902, 904, 906 measurements according to different setups of a random orbital sander in Fig. 9
1000 machine tool of Fig. 10
1002 motor shaft in Fig. 10
1017 further lower orbit path

## Claims

1. A rotor shaft assembly (124) for a machine tool (100), **characterized in that** the rotor shaft assembly (124) comprises:
- a one-piece, machined, elongated body for forming a rotor shaft for a motor, the elongated body being machined to include a lower orbit path;
- a guiding portion at one end of the elongated body for balancing the machine tool (100), arranged at an end of the elongated body, comprising:
∘ a connector for a tool (110) or tool shaft; and
∘ an orbit path (117) that is concentric with a longitudinal direction of the elongated body and eccentric with respect to the connector for a tool (110) or tool shaft (104); wherein the guiding portion comprises two or more balancing bodies (126) arranged movable at the orbit path (117) in a plane that is parallel to a radial direction of the rotor shaft assembly (120).

2. The rotor shaft assembly (124) of claim 1, wherein the guiding portion has at least one fixed eccentric balancing weight with respect to the rotor shaft for compensating a static and/or dynamic unbalance.

3. The rotor shaft assembly (124) of claim 1 or 2, wherein the orbit path (117) comprises 2, 3, 4, 5, 6, 7, 8, 9 or more balancing bodies (126).

4. The rotor shaft assembly (124) according to any of the preceding claims, comprising a further guiding portion arranged at an opposite end of the elongated body than the guiding portion, wherein the further guiding portion comprises an orbit path (115) that is concentric with the longitudinal direction of the elongated body and eccentric with the connector for a tool (110) or tool shaft (104), and the orbit path (115) of the further guiding portion comprises two or more balancing bodies (126) arranged movable at the orbit path (115) of the further guiding portion in a plane that is parallel to the radial direction of the rotor shaft assembly (120).

5. The rotor shaft assembly (124) of claim 4, wherein the orbit path (115) of the further guiding portion comprises 2, 3, 4, 5, 6, 7, 8, 9 or more balancing bodies (126).

6. The rotor shaft assembly (124) of any of claims 1 to 5, wherein the balancing bodies (126) are spherical balls or cylindrical rollers, or both spherical balls and cylindrical rollers.

7. A machine tool (100) comprising a motor **characterized in that** the motor comprises a rotor shaft assembly (124) according to any of claims 1 to 6.

8. The machine tool (100) according to claim 7, wherein the machine tool (100) is a handheld tool, for example a polisher, a sander, or a grinder.

9. The machine tool (100) according to claim 7 or 8, wherein the motor is an electric motor, for example a Brushless Direct Current (BLDC) electric motor, or the motor is a pneumatic motor.

10. The machine tool (100) according to any of the previous claims, comprising at least two orbit paths (115, 117) arranged successively along the longitudinal direction of the elongated body between a tool end of the rotor shaft and a stator (106) of the motor.

11. The machine tool (100) according to claim 10, wherein the one-piece, machined, rotor shaft (112) comprises the at least two orbit paths (115, 117).
